# FASCICULE DE BREVET EUROPEEN

(11) **EP 2 356 085 B1**
(45) Date de publication et mention de la délivrance du brevet: **13.02.2013**
(21) Numéro de dépôt: 09803800.3
(22) Date de dépôt: 02.12.2009
(51) Int. Cl.: C04B 41/90, F01D 5/28

(54) **PROCEDE POUR LE LISSAGE DE LA SURFACE D'UNE PIECE EN MATERIAU CMC**
VERFAHREN ZUM GLÄTTEN DER OBERFLÄCHE EINES AUS EINEM CMC-MATERIAL HERGESTELLTEN TEILS
METHOD FOR SMOOTHING THE SURFACE OF A PART MADE FROM A CMC MATERIAL

(30) Priorité: 04.12.2008 FR 0858257
(43) Date de publication de la demande: 17.08.2011
(73) Titulaire: HERAKLES, 33185 Le Haillan (FR); Snecma, 75015 Paris (FR)
(72) Inventeur: BOUILLON, Eric, F-33185 Le Haillan (FR); EBERLING-FUX, Nicolas, F-33140 VILLENAVE D'ORNON (FR); CHATEIGNER, Serge, F-33600 Pessac (FR)
(74) Mandataire: Desormiere, Pierre-Louis
(86) Numéro de dépôt international: PCT/FR2009/052363
(87) Numéro de publication internationale: WO 2010/063946

(56) Documents cités:
- FR-A- 2 850 649

## Description

### Arrière-plan de l'invention

La présente invention concerne les pièces en matériau composite à matrice céramique. Elle concerne plus particulièrement l'amélioration de l'état de surface de telles pièces.

Dans les moteurs aéronautiques et en particulier dans les turbines à gaz ou turbomachines de tels moteurs, les pièces présentant des formes aérodynamiques, comme les aubes, sont habituellement réalisées en alliages métalliques selon un procédé de fonderie et des usinages locaux. Les exigences actuelles et futures en matière de réduction de consommation spécifique, diminution de pollution, etc., dans les moteurs aéronautiques engendrent un accroissement de masse significative pour ces derniers et notamment au niveau des étages basse pression des turbines.

Les aubes constituent une partie importante de la masse des étages basse pression. Afin de réduire de façon significative la masse et admettre des températures de fonctionnement plus élevées que celles autorisées avec les alliages métalliques actuels, une solution serait d'utiliser des matériaux composites à matrice céramique pour la réalisation des aubes.

En effet, les matériaux composites à matrice céramique (CMC) font partie des matériaux composites dits thermostructuraux, c'est-à-dire des matériaux composites ayant des bonnes propriétés mécaniques et une capacité à conserver ces propriétés à température élevée. En outre, des pièces, telles que des aubes, réalisées en CMC présentent un gain de masse significatif par rapport à de mêmes pièces réalisées avec les alliages métalliques habituels.

De façon bien connue, les pièces en CMC sont formées par un renfort fibreux en fibres réfractaires (carbone ou céramique) qui est densifié par une matrice céramique, notamment carbure, nitrure, oxyde réfractaire,.... Des exemples typiques de matériaux CMC sont les matériaux C-SiC (renfort en fibres de carbone et matrice en carbure de silicium), les matériaux SiC-SiC et les matériaux C-C/SiC (matrice mixte carbone/carbure de silicium). La fabrication de pièces en composite CMC est bien connue. La densification du renfort fibreux peut être réalisée par voie liquide (imprégnation par une résine précurseur de la matrice céramique et transformation en céramique par réticulation et pyrolyse, le processus pouvant être répété) ou par voie gazeuse (infiltration chimique en phase vapeur).

Cependant, les pièces en CMC présentent un aspect de surface ondulé et relativement rugueux qui peut s'avérer incompatible avec les performances aérodynamiques requises pour des pièces telles que des aubes. L'ondulation de surface est due au renfort fibreux tandis que la rugosité est liée à la matrice céramique (en seal-coat), en particulier lorsque celle-ci est déposée par infiltration chimique en phase vapeur (CVI).

A l'inverse, les pièces réalisées en alliages métalliques et par les procédés associés présentent un aspect de surface lisse avec une rugosité très faible (de l'ordre de 1 µm).

Une solution pour améliorer l'état de surface d'une pièce en CMC consiste à appliquer à la surface de celle-ci une composition liquide contenant un polymère précurseur de céramique, par exemple du carbure de silicium, et une charge solide réfractaire sous forme de grains permettant de former un revêtement céramique. Ce revêtement céramique permet de gommer les ondulations présentes à la surface de la pièce. Cette étape est suivie d'un dépôt de céramique, par exemple de SiC, formé par infiltration chimique en phase vapeur pendant une durée de 30 heures environ qui permet de lier entre eux les grains de la charge réfractaire. Un tel procédé de traitement de surface de pièce en CMC est décrit dans le document US 2006/0141154.

Bien que ce procédé permette d'améliorer significativement l'état de surface d'une pièce en CMC en supprimant les ondulations et en réduisant la rugosité de surface à des valeurs inférieures à 40 µm, la nécessité d'une infiltration chimique par voie gazeuse supplémentaire après la formation du revêtement céramique entraîne une augmentation importante sur le coût et la durée de fabrication de la pièce.

### Objet et résumé de l'invention

La présente invention a pour but de proposer un procédé ne présentant pas l'inconvénient précité pour l'obtention de pièces en CMC avec un état de surface maîtrisé, notamment compatible avec des applications nécessitant des performances aérodynamiques.

A cet effet, l'invention propose un procédé pour le lissage de surface d'une pièce en matériau composite à matrice céramique présentant une surface ondulée et rugueuse, comprenant la formation sur la surface de la pièce d'un revêtement céramique réalisé par application sur la surface de la pièce d'une composition liquide contenant un polymère précurseur de céramique et une charge solide réfractaire, réticulation du polymère, et transformation du polymère réticulé en céramique par traitement thermique, procédé dans lequel, conformément à l'invention, le revêtement céramique est imprégné avec une composition métallique liquide.

Ainsi, le procédé permet, par l'imprégnation du revêtement céramique avec une composition métallique liquide, d'améliorer considérablement l'état de surface de la pièce en CMC, et ce avec un traitement bien plus rapide et économique qu'une infiltration chimique en phase gazeuse. L'imprégnation avec la composition métallique permet en outre de stabiliser et renforcer le revêtement céramique en liant entre eux les grains de la charge solide et/ou les particules du revêtement céramique.

La présente invention vise également une pièce en CMC dont l'état de surface a été amélioré conformément au procédé de l'invention, la pièce en CMC étant en outre munie d'un revêtement céramique comprenant une phase céramique et une charge solide, une composition métallique étant en outre présente sur la surface accessible du revêtement céramique.

La pièce peut être notamment une aube pour turbomachine.

### Brève description des dessins

D'autres caractéristiques et avantages de l'invention ressortiront de la description suivante de modes particuliers de réalisation de l'invention, donnés à titre d'exemples non limitatifs, en référence aux dessins annexés, sur lesquels :
- la figure 1 est vue tridimensionnelle montrant l'état de surface d'une portion d'une pièce en CMC sans traitement supplémentaire de surface,
- la figure 2 est une courbe de mesure des variations dimensionnelles de la portion de pièce de la figure 1,
- la figure 3 est une courbe de mesure des variations dimensionnelles à la surface d'un matériau métallique utilisé pour la réalisation d'aubes de moteur aéronautique,
- la figure 4 est un ordinogramme illustrant des étapes successives d'un mode de mise en oeuvre d'un procédé conforme à l'invention,
- la figure 5 est une microphotographie montrant un matériau CMC obtenu conformément à un procédé de l'invention,
- la figure 6 est une vue en perspective d'une aube de turbomachine.

### Description détaillée de modes de réalisation

La présente invention propose un procédé pour le lissage de surface d'une pièce en matériau composite à matrice céramique (CMC) présentant une surface ondulée et rugueuse.

La fabrication d'une pièce en CMC débute par la fourniture d'une structure fibreuse à partir de laquelle sera formée une préforme fibreuse dont la forme est voisine de celle de la pièce à fabriquer.

La structure fibreuse peut être sous différentes formes, telles que :
- tissu bidimensionnel (2D),
- tissu tridimensionnel (3D) obtenu par tissage 3D ou multicouches,
- tresse,
- tricot,
- feutre,
- nappe unidirectionnelle (UD) de fils ou câbles ou nappes multidirectionnelle (nD) obtenue par superposition de plusieurs nappes UD dans des directions différentes et liaison des nappes UD entre elles par exemple par couture, par agent de liaison chimique ou par aiguilletage.

On peut aussi utiliser une structure fibreuse formée de plusieurs couches superposées de tissu, tresse, tricot, feutre, nappes ou autres, lesquelles couches sont liées entre elles par exemple par couture, par implantation de fils ou d'éléments rigides ou par aiguilletage.

Les fibres constitutives de la structure fibreuse sont des fibres réfractaires, c'est-à-dire des fibres en céramique, par exemple en carbure de silicium (SiC) telles que notamment des fibres SiC Nicalon® de la société NIPPON CARBON Co., Ltd. ou des fibres SiC Sylramic® de la société COI Ceramics, Inc., des fibres en carbone ou même encore des fibres en un oxyde réfractaire, par exemple en alumine (Al₂O₃).

Une fois constituée, la texture fibreuse est consolidée par imprégnation de cette dernière avec une composition liquide contenant une résine de consolidation précurseur de céramique. A cet effet, la texture fibreuse est immergée dans un bain contenant la résine et habituellement un solvant de celle-ci. Après égouttage, un séchage est réalisé en étuve. Le séchage peut être accompagné d'une pré-réticulation ou réticulation partielle de la résine. Une telle pré-réticulation apportant une raideur supplémentaire, elle doit, si elle est réalisée, rester limitée pour préserver une déformabilité suffisante de la texture fibreuse sur laquelle la première couche d'interphase a déjà été formée.

D'autres techniques connues d'imprégnation peuvent être utilisées telles que préparation d'un pré-imprégné par passage de la texture fibreuse dans une imprégnatrice en continu, imprégnation par infusion, ou encore imprégnation par RTM ("Resin Transfer Moulding").

La résine de consolidation est choisie pour laisser, après pyrolyse, un résidu céramique suffisant pour assurer la consolidation de la préforme fibreuse réalisée ensuite.

Une résine précurseur de céramique peut être par exemple une résine polycarbosilane précurseur de carbure de silicium (SiC), ou une résine polysiloxane précurseur de SiCO, ou une résine polyborocarbosilazane précurseur de SiCNB, ou encore une résine polysilazane précurseur de SiCN.

Après imprégnation, une préforme fibreuse destinée à constituer le renfort fibreux de la pièce à réaliser, et ayant une forme correspondant sensiblement à celle de cette pièce, est mise en forme par conformation de la texture fibreuse à l'aide d'un outillage de maintien.

La mise en forme de la préforme fibreuse est de préférence accompagnée d'un compactage de la structure fibreuse afin d'augmenter le taux volumique de fibres dans le matériau composite de la pièce à réaliser.

Après mise en forme de la préforme, la réticulation de la résine est réalisée, ou achevée s'il y a eu pré-réticulation, la préforme étant dans un outillage.

Ensuite, la consolidation est achevée par un traitement thermique de pyrolyse de la résine. La pyrolyse est réalisée à une température par exemple d'environ 900°C à 1000°C.

La consolidation peut être également réalisée par infiltration chimique en phase gazeuse (CVI).

Après cette consolidation, la densification de la préforme fibreuse par une matrice céramique est poursuivie.

La densification est avantageusement réalisée par infiltration chimique en phase gazeuse (CVI), les paramètres du processus CVI et la nature de la phase gazeuse réactionnelle étant adaptés à la nature de la matrice à former. On peut ainsi enchaîner dans le même four les opérations de pyrolyse de la résine de consolidation et de densification.

La matrice céramique formée par CVI peut être une matrice SiC, une matrice à base de silicium telle que du nitrure de silicium (Si₃N₄), ou une matrice au moins en partie auto-cicatrisante, telle qu'une matrice silicium-bore-carbone (Si-B-C) ou une matrice carbure de bore (B₄C) ou encore une matrice séquencée avec des phases de matrices alternées en céramique non cicatrisante et en céramique cicatrisante. On pourra se référer notamment aux documents FR 2 401 888, US 5 246 736, US 5 965 266, US 6 068 930 et US 6 291 058.

La matrice céramique peut être déposée en plusieurs cycles d'infiltration successifs avec entre chaque cycle une opération d'usinage permettant de rouvrir la porosité du matériau en surface et de faciliter le dépôt de la matrice dans le renfort fibreux.

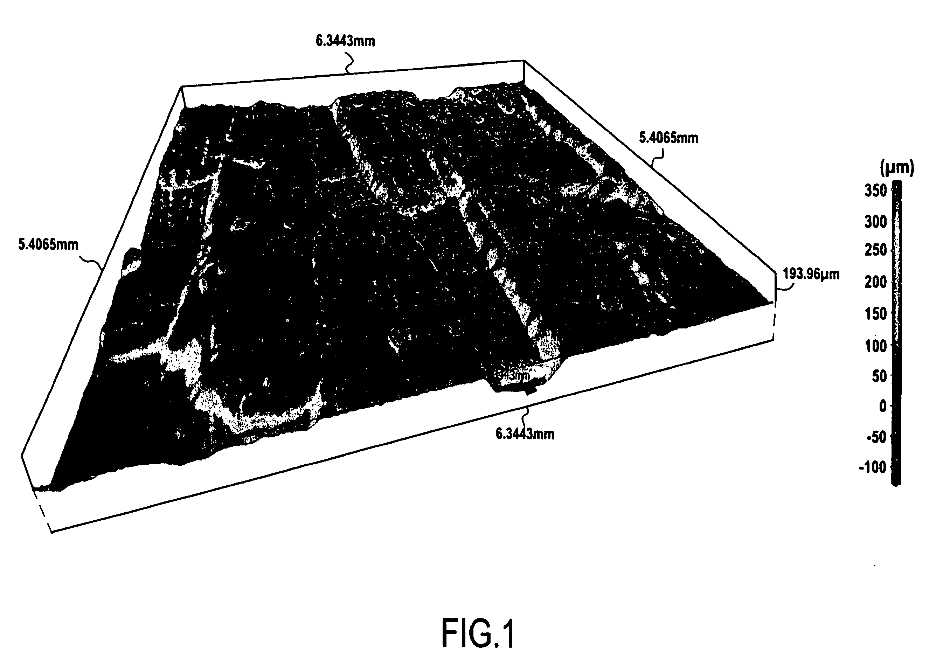

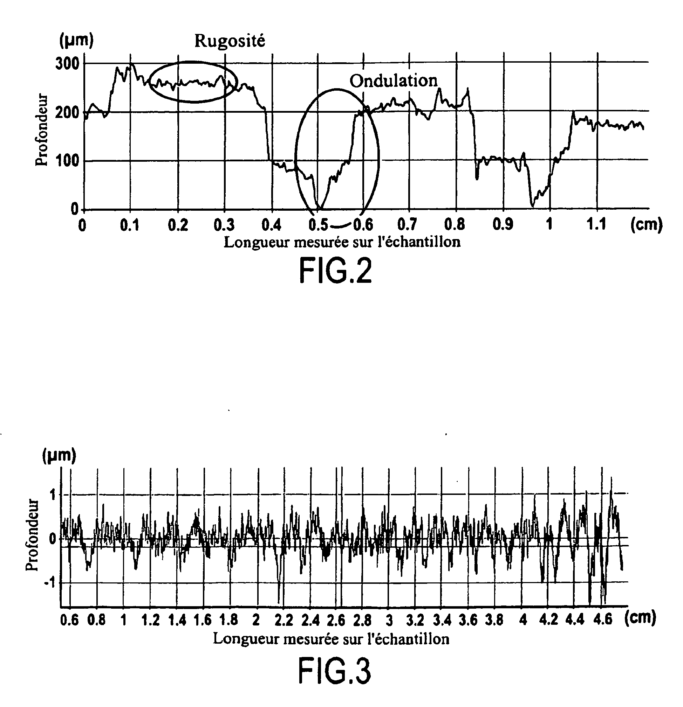

La figure 1 montre l'état de surface d'une portion d'une pièce en CMC réalisée à partir d'une texture fibreuse multicouche de tissage tridimensionnel de fibres de SiC (Guipex® base satin de 8) consolidée, mise en forme et densifiée suivant la méthode décrite ci-dessus. Comme mesurée sur la figure 2, la pièce présente en surface à la fois des ondulations de plus de 200 µm d'amplitude et un niveau de rugosité de plusieurs dizaines de micromètres.

Comme expliqué précédemment, une telle irrégularité de surface ne peut vraisemblablement pas permettre d'utiliser la pièce telle quelle pour des applications aérodynamiques. Par comparaison, la figure 3 montre une mesure de l'état de surface d'une aube d'un étage basse pression d'un moteur aéronautique, celle-ci ayant été réalisée en matériau métallique. On remarque que cette aube ne comporte pas d'ondulation de surface et présente un niveau moyen de rugosité de l'ordre de 1 µm.

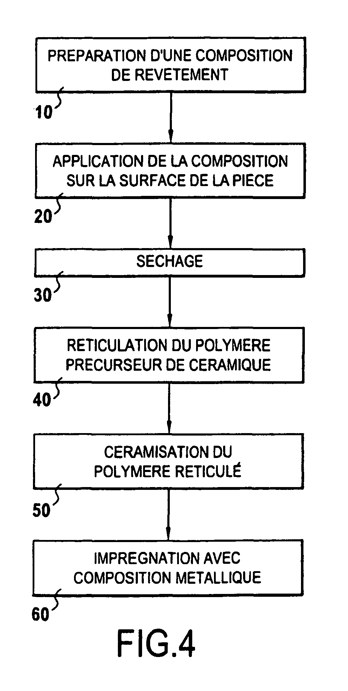

En référence à la figure 4, un mode de mise en oeuvre d'un procédé conforme à l'invention, pour le lissage de surface d'une pièce en CMC, comprend les étapes suivantes.

Une composition de revêtement céramique est préparée (étape 10) qui comprend une charge solide réfractaire sous forme d'une poudre, notamment en céramique, un polymère précurseur de céramique et un solvant éventuel du polymère.

La poudre est par exemple une poudre de SiC. La granulométrie est choisie suffisamment fine pour permettre aux grains de poudre de pénétrer dans la porosité superficielle à combler du matériau composite CMC. De préférence, la taille moyenne des grains est choisie inférieure à 100 microns, par exemple comprise entre 5 microns et 50 microns. On pourra également utiliser des poudres de granulométries différentes. Par exemple, on peut utiliser des grains de taille moyenne comprise entre 5 microns et 15 microns en association avec des grains de taille moyenne comprise entre 25 microns et 50 microns, la proportion en masse de grains de plus grande taille moyenne étant par exemple au moins égale à celle des grains de plus petite taille moyenne.

D'autres-poudres, notamment en céramique et ayant sensiblement la même granulométrie, peuvent être utilisées. Elles peuvent, par exemple, être choisies parmi des poudres de carbure (autre que SiC), nitrure ou borure, des poudres de différentes natures pouvant être mélangées.

Le polymère précurseur de céramique est choisi en fonction de la nature du revêtement désiré. Dans le cas d'un revêtement en SiC, le polymère est choisi par exemple parmi le polycarbosilane (PCS) et le polytitanocarbosilane (PTCS).

D'autres polymères précurseurs de céramique sont utilisables, par exemple des silicones qui sont des précurseurs de SiC (ou SiC+C, avec carbone en excès), des polysilazanes qui, pyrolyses sous un gaz, permettent d'obtenir des résidus à base de Si₃N₄ et/ou de SiC, et des polyborazines, précurseurs de BN.

On notera que la céramique constitutive des charges solides et celle dont le polymère est précurseur sont de préférence, mais non nécessairement, de même nature.

Le solvant est déterminé en fonction du polymère précurseur de céramique utilisé. Dans le cas du PCS, par exemple, le solvant peut être du xylène. D'autres solvants sont utilisables pour d'autres polymères, par exemple l'heptane, l'hexane, le méthyléthylcétone (MEC) ou l'éthanol pour des silicones.

La quantité de charge solide, par rapport à celle du polymère précurseur de céramique est choisie pour assurer un comblement satisfaisant de la porosité superficielle du matériau composite thermostructural, tout en permettant à la composition de pénétrer sur une certaine profondeur. Ainsi, la quantité en masse de charge solide est de préférence comprise entre 0,4 fois et 4 fois la quantité en masse de polymère précurseur de céramique. Cette plage permet en outre d'ajuster le taux de retrait du polymère précurseur de céramique lors de sa transformation.

La quantité de solvant utilisé est choisie pour conférer la viscosité appropriée à la composition liquide en vue de son application à la surface de la pièce.

A titre d'exemple, une composition typique pour une composition destinée à la formation d'un revêtement SiC peut être choisie dans les limites suivantes :
- Poudre de SiC (granulométrie moyenne comprise entre 5 et 50 microns) : entre 2 et 7 parties en poids;
- PCS (précurseur de SiC) : entre 1 et 3 parties en poids;
- Xylène (solvant du PCS) : entre 2 et 5 parties en poids;

La composition liquide est appliquée sur la surface à traiter de la pièce (étape 20).

L'application peut être simplement réalisée à la brosse, ou au pinceau. On pourra utiliser d'autres méthodes, par exemple le pistollettage.

Après séchage (étape 30), par exemple à l'air chaud, pour éliminer le solvant, on procède à la réticulation du polymère précurseur de céramique (étape 40). La réticulation peut être réalisée par traitement thermique. Dans le cas par exemple du PCS, la température est progressivement élevée jusqu'à un palier d'environ 350°C.

Le polymère réticulé est soumis à un traitement thermique aux fins de céramisation (étape 50). Dans le cas du PCS, la transformation en SiC est réalisée en élevant progressivement la température jusqu'à un palier d'environ 900°C.

Plusieurs couches successives de composition liquide peuvent être appliquées. Après application de chaque couche, on procède de préférence au moins au séchage de la composition et à la réticulation du polymère précurseur de céramique. La céramisation peut être réalisée simultanément pour toutes les couches.

Bien entendu, les conditions de réticulation et de céramisation pourront être différentes avec d'autres précurseurs de céramiques, ces conditions ne présentant aucun caractère original.

On obtient alors un revêtement céramique comprenant une phase issue de la céramisation du précurseur de céramique et une charge solide. Ce revêtement comble les ondulations et les creux à la surface de la pièce.

Toutefois, le revêtement céramique ainsi formé doit être stabilisé structurellement. En particulier, il est nécessaire d'assurer une liaison entre les grains de la charge solide en raison du retrait de la résine précurseur de céramique lors de sa transformation. En effet, lors du traitement thermique aux fins de céramisation, il se produit un retrait de matière au niveau du précurseur de céramique entraînant la fissuration ou l'effritement de la céramique. Les grains ne sont alors plus tous liés les uns avec les autres au sein d'un bloc de céramique continu.

A cet effet et conformément à un mode de réalisation de l'invention, on imprègne la surface accessible du revêtement céramique avec une composition métallique liquide (étape 60). Par "surface accessible", on entend la surface géométrique externe du revêtement céramique, mais aussi la surface interne du revêtement qui est débouchante, c'est-à-dire la surface rendue accessible depuis l'extérieur après retrait lors du traitement thermique de céramisation (accès à cette surface interne par les fissures/cracks débouchants).

Comme décrit ci-après en détail, c'est cette surface accessible que l'on va imprégner avec la composition métallique liquide de manière à stabiliser le revêtement céramique (liaison des grains) et à former à la surface de celui-ci une couche présentant un état de surface lisse.

On choisit une composition métallique qui est compatible thermiquement, c'est-à-dire une composition ayant un coefficient de dilatation thermique proche de celui du matériau de la pièce, de préférence compris entre 4.10⁻⁶/°C et 5.10⁻⁶/°C (le matériau CMC ayant un coefficient de dilatation thermique compris entre 4.10⁻⁶/°C et 4,5.10⁻⁶/°C environ). La composition métallique est en outre choisie pour être compatible chimiquement avec le matériau CMC de la pièce. En outre, la composition métallique présente de préférence une température de fusion inférieure à la température de stabilité (température au-delà de laquelle les caractéristiques mécaniques commencent à se dégrader) du matériau CMC et en particulier la température de stabilité des fibres du matériau.

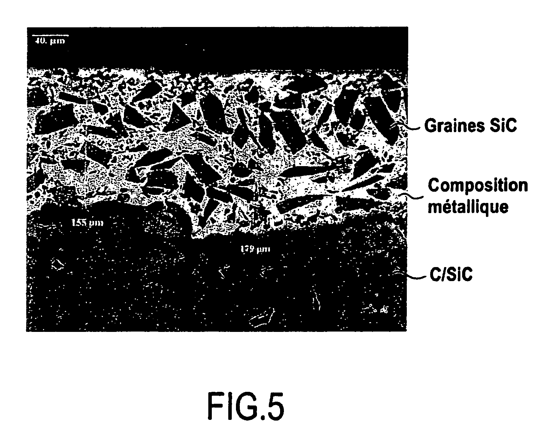

A titre d'exemple, une pièce, en composite C/SiC (renfort en fibres de carbone et matrice SiC) et comprenant un revêtement céramique tel que décrit précédemment, peut être imprégnée avec une composition silicium-germanium contenant, en pourcentage massique, 90% de germanium et 10% de silicium. Cette composition présente une température de fusion de 1150°C environ. La figure 5 montre le revêtement de surface ainsi obtenu.

Un autre exemple de composition métallique qui peut être utilisée est une composition silicium-nickel contenant, en pourcentage massique, 50% de silicium et 50% de nickel. Cette composition a une température de fusion de 1100°C environ.

Dans le cas d'une pièce dont les fibres SiC du renfort fibreux présentent une température de stabilité inférieure ou proche de celle de fusion de la composition métallique utilisée, la durée du traitement thermique appliqué pour faire fondre la composition métallique et imprégner le revêtement céramique sera limitée. A titre d'exemple, une pièce réalisée en matériau Cerasep®, c'est-à-dire en composite SiC/SiC (fibres renfort et matrice SiC), contient des fibres Nicalon® qui sont thermostables jusqu'à 1100°C environ. Dans ce cas, si on utilise, par exemple, une composition métallique contenant un alliage de silicium et de germanium (SiGe) qui présente une température de fusion d'environ 1150°C, la durée du traitement thermique à cette température sera d'au plus 30 minutes. Pour un traitement thermique réalisé à 1250°C, sa durée sera limitée à 20 minutes.

La couche de composition métallique est formée de manière à compenser les irrégularités de surface sur le revêtement céramique, la quantité de composition métallique étant choisie en fonction des irrégularités à compenser. La couche ainsi formée permet de lisser la surface du revêtement céramique et, par conséquent, celle de la pièce.

L'imprégnation par une composition métallique permet en outre, par infiltration du revêtement céramique, de lier les grains et/ou particules de ce dernier entre eux. Une telle imprégnation permet également d'accroître la tenue à l'usure de la pièce en CMC (en conditions de frottement homogène).

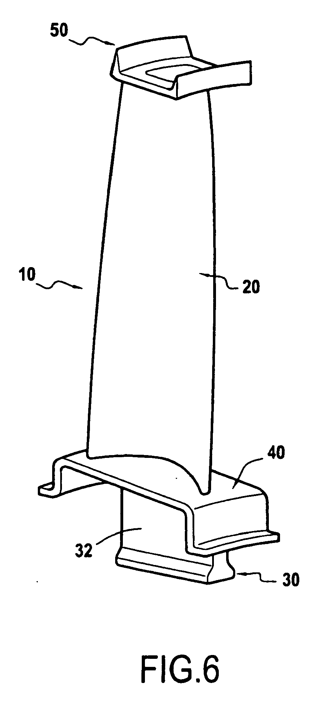

L'invention est applicable à différents types d'aubes de turbomachine, notamment des aubes de compresseur et de turbine de différents corps de turbines à gaz, par exemple une aube de roue mobile de turbine basse pression (BP), telle que celle illustrée par la figure 6.

L'aube 10 de la figure 6 comprend de façon en soi bien connue, une pale 20, un pied 30 formé par une partie de plus forte épaisseur, par exemple à section en forme de bulbe, prolongé par une échasse 32, une plateforme intérieure 40 située entre l'échasse 32 et la pale 20 et une plateforme extérieure ou talon 50 au voisinage de l'extrémité libre de la pale.

## Revendications

1. Procédé pour le lissage de surface d'une pièce en matériau composite à matrice céramique présentant une surface ondulée et rugueuse, comprenant la formation sur la surface de la pièce d'un revêtement céramique réalisé par application sur la surface de la pièce d'une composition liquide contenant un polymère précurseur de céramique et une charge solide réfractaire, réticulation du polymère, et transformation du polymère réticulé en céramique par traitement thermique,
**caractérisé en ce qu'**il comprend en outre l'imprégnation du revêtement céramique par une composition métallique liquide.

2. Procédé selon la revendication 1, **caractérisé en ce que** la pièce comprend un renfort en fibres de carbone densifié par une matrice de carbure de silicium.

3. Procédé selon la revendication 1, **caractérisé en ce que** la pièce comprend un renfort en fibres de carbone densifié par une matrice à base de silicium.

4. Procédé selon la revendication 1, **caractérisé en ce que** la pièce comprend un renfort en fibres de carbure de silicium densifié par une matrice de carbure de silicium et **en ce que** la composition métallique liquide est une composition à base d'alliage silicium-germanium ou silicium-nickel.

5. Procédé selon l'une quelconque des revendications 1 à 4, caractérisé en que la pièce en matériau composite à matrice céramique est une aube de turbine à gaz.

6. Pièce en matériau composite thermostructural comportant un renfort fibreux en fibres réfractaires densifié par une matrice céramique, la pièce étant en outre munie d'un revêtement céramique comprenant une phase céramique et une charge solide **caractérisée en ce qu'**elle comprend en outre une couche de composition métallique formée sur la surface accessible dudit revêtement céramique.

7. Pièce selon la revendication 6, constituant une aube de turbine à gaz.

8. Turbomachine équipée d'une aube selon la revendication 7 ou fabriquée selon le procédé de la revendication 5.

## Claims

1. A method of smoothing the surface of a part made of ceramic matrix composite material presenting a surface that is undulating and rough, the method comprising forming a ceramic coating on the surface of the part, the coating being made by applying a liquid composition to the surface of the part, the composition containing a ceramic-precursor polymer and a refractory solid filler, curing the polymer, and transforming the cured polymer into ceramic by heat treatment, the method being **characterized in that** it further comprises impregnating the ceramic coating with a liquid metallic composition.

2. A method according to claim 1, **characterized in that** the part comprises carbon fiber reinforcement densified by a matrix of silicon carbide.

3. A method according to claim 1, **characterized in that** the part comprises carbon fiber reinforcement densified by a silicon-based matrix.

4. A method according to claim 1, **characterized in that** the part comprises silicon carbide fiber reinforcement densified by a silicon carbide matrix, and **in that** the liquid metallic composition is a composition based on silicon-germanium or silicon-nickel alloy.

5. A method according to any one of claims 1 to 4, **characterized in that** the ceramic matrix composite material part is a gas turbine blade.

6. A part made of thermostructural composite material comprising refractory fiber reinforcement densified by a ceramic matrix, the part also being provided with a ceramic coating comprising a ceramic phase and a solid filler, the part being **characterized in that** it further comprises a layer of metallic composition formed on the accessible surface of said ceramic coating.

7. A part according to claim 6, constituting a gas turbine blade.

8. A turbomachine fitted with a blade according to claim 7 or fabricated according to the method of claim 5.

## Patentansprüche

1. Verfahren zum Oberflächenglätten eines Teils aus Keramikmatrix-Verbundwerkstoff, das eine gewellte und rauhe Oberfläche aufweist, umfassend das Ausbilden einer Keramikbeschichtung auf der Oberfläche des Teils, die durch Auftragen einer flüssigen Zusammensetzung auf die Oberfläche des Teils, welche ein Keramikvorläuferpolymer und einen feuerfesten festen Füllstoff enthält, Vernetzen des Polymers und Umwandeln des vernetzten Polymers durch thermische Behandlung in Keramik hergestellt wird,
**dadurch gekennzeichnet, daß** es ferner das Imprägnieren der Keramikbeschichtung mit einer flüssigen Metallzusammensetzung umfaßt.

2. Verfahren nach Anspruch 1, **dadurch gekennzeichnet, daß** das Teil eine Kohlenstoffaserverstärkung, die durch eine Siliciumcarbid-Matrix verdichtet ist, umfaßt.

3. Verfahren nach Anspruch 1, **dadurch gekennzeichnet, daß** das Teil eine Kohlenstoffaserverstärkung, die durch eine Matrix auf Siliciumbasis verdichtet ist, umfaßt.

4. Verfahren nach Anspruch 1, **dadurch gekennzeichnet, daß** das Teil eine Verstärkung aus Siliciumcarbidfasern, die durch eine Siliciumcarbid-Matrix verdichtet ist, umfaßt und daß die flüssige Metallzusammensetzung eine Zusammensetzung auf der Basis einer Silicium-Germanium- oder Silicium-Nickel-Legierung ist.

5. Verfahren nach einem der Ansprüche 1 bis 4, **dadurch gekennzeichnet, daß** das Teil aus Keramikmatrix-Verbundwerkstoff eine Gasturbinenschaufel ist.

6. Teil aus hochtemperaturbeständigem Verbundwerkstoff, umfassend eine Faserverstärkung aus feuerfesten Fasern, die durch eine Keramikmatrix verdichtet ist, wobei das Teil ferner mit einer Keramikbeschichtung versehen ist, die eine Keramikphase und einen festen Füllstoff umfaßt, **dadurch gekennzeichnet, daß** es ferner eine Schicht aus einer Metallzusammensetzung umfaßt, die auf der zugänglichen Oberfläche der Keramikbeschichtung ausgebildet ist.

7. Teil nach Anspruch 6, das eine Gasturbinenschaufel bildet.

8. Turbomaschine, die mit einer Schaufel nach Anspruch 7 oder nach dem Verfahren des Anspruchs 5 hergestellt ausgestattet ist.
